# FASCICULE DE BREVET EUROPEEN

(11) **EP 2 277 062 B1**
(45) Date de publication et mention de la délivrance du brevet: **14.11.2018**
(21) Numéro de dépôt: 09745703.0
(22) Date de dépôt: 11.05.2009
(51) Int. Cl.: G01T 1/16

(54) **DISPOSITIF ET PROCEDE DE CONTRÔLE EN CONTINU DE PERSONNES, DE VÉHICULES, DE CONTENEURS OU DE COLIS**
VORRICHTUNG UND VERFAHREN ZUR KONTINUIERLICHEN ÜBERPRÜFUNG VON PERSONEN, FAHRZEUGEN, BEHÄLTERN ODER PAKETEN
DEVICE AND METHOD FOR CONTINUOUSLY CHECKING PEOPLE, VEHICLES, CONTAINERS OR PACKAGES

(30) Priorité: 13.05.2008 FR 0853081
(43) Date de publication de la demande: 26.01.2011
(73) Titulaire: Commissariat à l'Énergie Atomique et aux Énergies Alternatives, 75015 Paris (FR)
(72) Inventeur: GUILLOT, Ludovic, F-91360 Villemoisson Sur Orge (FR); REBOLI, Anne, F-75015 Paris (FR); ABT, Dominique, F-92160 Antony (FR)
(74) Mandataire: Ilgart, Jean-Christophe
(86) Numéro de dépôt international: PCT/EP2009/055645
(87) Numéro de publication internationale: WO 2009/138371

(56) Documents cités:
- US-A1- 2004 178 339
- US-A1- 2005 023 477
- US-A1- 2006 284 094
- GUTIERREZ S ET AL: "Contribution of a germanium detector in mobile gamma-ray spectrometry. Spectral analysis and performance" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 482, no. 1-2, 11 avril 2002 (2002-04-11), pages 425-433, XP004353081 ISSN: 0168-9002
- PERRIN J ET AL: "Determination of the vertical distribution of radioelements (K, U, Th, Cs) in soils from portable HP-Ge spectrometer measurements: A tool for soil erosion studies" APPLIED RADIATION AND ISOTOPES, ELSEVIER, OXFORD, GB, vol. 64, no. 7, 1 juillet 2006 (2006-07-01), pages 830-843, XP025135079 ISSN: 0969-8043 [extrait le 2006-07-01]
- GUILLOT, L: "Extraction of full absorption peaks in airborne gamma-spectrometry by filtering techniques coupled with a study of the derivatives. Comparison with the window method" JOURNAL OF ENVIRONMENTAL RADIOACTIVITY, vol. 53, 2001, pages 381-398, XP002516954 cité dans la demande
- P. Blum ET AL: "Analysis of natural gamma-ray spectra obtained from sediment cores with the shipboard scintillation detector of the Ocean Drilling Program: example from Leg 156" In: "Proceedings of the Ocean Drilling Program, 156 Scientific Results", 1 January 1997 (1997-01-01), Ocean Drilling Program, XP055450737, vol. 156, page 183, DOI: 10.2973/odp.proc.sr.156.024.1997,

## Description

### DOMAINE TECHNIQUE

La présente invention concerne un dispositif et un procédé de contrôle en continu de personnes, de véhicules, de conteneurs (containers) ou de colis comprenant un dispositif de détection et d'identification en temps réel d'une source de rayonnement gamma en mouvement.

Le domaine de l'invention est celui de la prévention des risques liés à des transports illégaux de matières radioactives et nucléaires, et plus particulièrement celui de la surveillance en continu et sans point de ralentissement obligatoire des personnes, des véhicules, des conteneurs ou des colis.

### ÉTAT DE LA TECHNIQUE ANTÉRIEURE

Près de 300 000 colis autorisés de matières radioactives (par exemple des sources utilisées dans l'industrie ou des produits radiopharmaceutiques), sans compter les transports de matières contenant de fortes concentrations en radionucléides naturels circulent en France chaque année, par voie terrestre, maritime ou aérienne. Dans ce flux, on cherche à détecter à l'aide d'un système de surveillance radiologique des mouvements à visée criminelle.

La surveillance radiologique des marchandises et des individus à l'échelle d'un territoire passe par l'utilisation de systèmes de détection de radioactivité appropriés afin de ne pas perturber le trafic normal ni inquiéter inutilement la population. En particulier, de tels systèmes doivent contrôler en continu les flux de personnes et de marchandises sans pour autant en limiter les mouvements. Ces systèmes de détection doivent donc pouvoir détecter une source en mouvement dont la vitesse peut atteindre 100 km/h à des distances de plusieurs mètres.

Afin de différentier les sources radioactives transportées illégalement des nombreuses autres sources transitant légalement sur le territoire ou à nos frontières, il est tout aussi important de détecter une source radioactive que d'identifier sa nature. L'identification d'une telle source doit se faire rapidement, en temps réel et avec un taux de fausse alarme le plus bas possible. Il est, donc, nécessaire, afin de limiter le nombre de transports de matière à inspecter, d'avoir recours à un système permettant la détection et l'identification immédiate des radionucléides détectés.

Dans le domaine de la détection et de l'identification de sources radioactives en mouvement, on connaît ainsi plusieurs dispositifs.

Un premier dispositif de l'art connu, décrit dans le document référencé [1] en fin de description, qui est un détecteur modulaire et transportable permettant de détecter et d'identifier une ou des sources radioactives se déplaçant rapidement, comprend au moins un détecteur de radioactivité fonctionnant à température ambiante, un spectromètre numérique permettant l'échantillonnage du signal sur des périodes inférieures à 150 ms et une unité d'acquisition et de traitement. La détection et l'identification d'anomalies radioactives sont effectuées successivement par deux algorithmes. Dans un premier temps un algorithme reposant sur la méthode SPRT (« Sequential Probability Ratio Test ») permet de déterminer si les variations du comptage sont dues aux fluctuations statistiques du fond radiologique ou à une anomalie radioactive. Une fois que le spectre représentatif d'une anomalie radioactive est isolé, un second algorithme permet l'identification de la source à l'origine de l'anomalie.

Un second dispositif de l'art connu, décrit dans le document référencé [2], qui est un détecteur fixe permettant de détecter et d'identifier une ou des sources radioactives se déplaçant rapidement, comprend au moins un détecteur de radioactivité fonctionnant à température ambiante, un spectromètre numérique permettant l'échantillonnage du signal sur des périodes au moins égales à 125 ms et une unité d'acquisition et de traitement. La détection d'une anomalie radioactive se fait en premier lieu par corrélation entre plusieurs spectres qui contiennent l'information du passage d'une source radioactive, d'où un temps de comptage nécessairement court. Une fois l'anomalie isolée, l'identification du radionucléide se fait par correspondance entre l'énergie de l'anomalie détectée et l'énergie d'émission du radionucléide contenu dans une bibliothèque.

De plus, un algorithme de détection et d'identification d'anomalies gamma dans un spectre de l'art connu, décrit dans le document référencé [3], qui est un algorithme de détection et d'identification de radionucléides par analyse du profil spectral de l'art connu développé pour l'analyse des mesures gamma aéroportées enregistrée à partir de détecteur au iodure de sodium (Nal), repose sur la localisation des pics d'absorption totale sur toute la gamme énergétique de 0 à 3 MeV. Cet algorithme permet, malgré une statistique de comptage faible due aux temps de comptages courts (de 0,5 à 5 s), de détecter et d'identifier des anomalies gamma sur un seul spectre, sans nécessiter une connaissance préalable des radionucléides présents. Enfin, le document référencé [4] décrit un procédé d'analyse de spectres gamma. Ce document décrit, en particulier, qu'il est avantageux, premièrement, de retirer l'influence du fond radiologique (appelé "zéro-background"), et deuxièmement, de l'influence des autres types d'interactions, tels que la diffusion Compton ou la production de paires.

L'invention a pour objet, par rapport à ces dispositifs de l'art connu, d'améliorer la détection de sources radioactives en mouvement et leur identification en temps réel.

### EXPOSÉ DE L'INVENTION

L'invention concerne un dispositif de contrôle, tel que défini dans la revendication 1, en continu de personnes, de véhicules, de conteneurs ou de colis comprenant un dispositif de détection et d'identification en temps réel d'une source de rayonnement gamma, en mouvement, comprenant :
- au moins un détecteur de rayonnement délivrant un signal proportionnel au rayonnement gamma,
- au moins un spectromètre permettant d'échantillonner et de mettre en forme ce signal,
- une unité d'acquisition et de traitement permettant de traiter automatiquement les données issues du spectromètre,
- un poste de contrôle distant,
caractérisé en ce que cette unité d'acquisition et de traitement comprend des moyens d'analyse du spectre comportant successivement :
- des moyens de lissage de ce spectre,
- des moyens de calcul d'un spectre de référence
- des moyens de soustraction de ce spectre de référence,
- des moyens de recherche des pics d'absorption totale,
- des premiers moyens de validation de la détection des pics,
- des moyens d'estimation du fond sous les pics validés du spectre,
- des moyens de calcul des caractéristiques des pics,
- des seconds moyens de validation de la détection des pics,
- des moyens d'identification des radionucléides de la source radioactive,
- des moyens de visualisation des résultats.

Dans une variante de réalisation, au moins un écran en plomb ou cuivre est ajouté sur l'une des faces d'au moins un détecteur. Le au moins un spectromètre peut être un spectromètre analogique qui permet un échantillonnage du signal au moins toutes les secondes. Ce peut également être un spectromètre numérique qui permet un échantillonnage du signal au moins toutes les 0,5 secondes.

Selon l'invention, le détecteur comprend au moins un cristal d'iodure de sodium. Lorsqu'il comprend plusieurs cristaux, le dispositif de l'invention comprend un spectromètre pour chaque cristal, et des moyens de sommation des signaux résultants avant leur envoi vers l'unité d'acquisition et de traitement. Chaque cristal dispose d'un spectromètre afin de mettre en forme les signaux directement à la sortie de celui-ci. Si dans une balise, plusieurs cristaux sont présents, les signaux issus de chaque spectromètre sont synchronisés puis sommés avant le traitement par l'algorithme. L'augmentation du nombre de cristaux permet d'augmenter la sensibilité du dispositif par l'accroissement de sa surface.

Le dispositif de l'invention peut comporter, en outre :
- un système de prise de vues,
- un système de positionnement GPS,
- un système de transmission de données à distance vers un poste de contrôle distant,
- un détecteur de neutrons.

Dans une variante de réalisation, plusieurs dispositifs selon l'invention peuvent aussi être reliés entre eux ou reliés au même poste de contrôle distant, formant ainsi un réseau. Ceci permet de corréler les données provenant de plusieurs dispositifs et d'en déduire des informations supplémentaires sur le déplacement d'un porteur de source ou sur la localisation précise de cette source, par exemple.

L'invention concerne également un procédé de contrôle, selon la revendication 10, en continu de personnes, de véhicules, de conteneurs ou de colis comprenant une détection et une identification en temps réel d'une source de rayonnement gamma, en mouvement comprenant les étapes suivantes :
- enregistrement du spectre du rayonnement émis par cette source,
- analyse du spectre du signal détecté,
caractérisé en ce que cette étape d'analyse comprend les phases suivantes :
- lissage de ce spectre,
- calcul d'un spectre de référence,
- soustraction de ce spectre de référence,
- recherche des pics d'absorption totale,
- première validation de la détection des pics,
- estimation du fond sous les pics validés du spectre,
- calcul des caractéristiques des pics,
- seconde validation de la détection des pics,
- identification des radionucléides de la source radioactive,
- visualisation des résultats, en classant une source détectée comme n'étant pas une menace, comme pouvant être une menace ou comme étant une menace.

Avantageusement, la phase de lissage comprend un ajustement par la méthode des moindres carrés d'un polynôme de degré 4 sur les données brutes. Le spectre référence est un spectre moyen calculé sur un nombre paramétrable de N mesures (N entier positif supérieur à 1). Le spectre de référence est recalculé à partir des N dernières mesures. Le calcul du spectre de référence ne prend pas en compte un point de mesure pour lequel au moins un pic a été détecté, validé et identifié comme résultant de l'émission d'un radionucléide. La phase de recherche de pics comprend l'étude successive des dérivées première et seconde du spectre, un pic étant détecté à chaque fois que la dérivée première prend des valeurs positives ou que la dérivée seconde prend des valeurs négatives. Dans la première validation de la détection des pics, un pic est validé lorsque les dérivées première et seconde dépassent un seuil respectif. Dans la seconde validation de la détection des pics, on valide un pic, si l'aire calculée de ce pic est supérieure au seuil de décision associé et si la résolution de ce pic est supérieure à la moitié de la résolution théorique. Dans la phase d'identification des radionucléides de la source, les énergies des pics d'absorption totale détectés et validés sont comparés aux énergies données par une table de radioéléments définie par l'utilisateur.

L 'invention concerne un dispositif et un procédé temps réel (au rythme d'une seconde) de détection et d'identification de sources radioactives présentes sur un porteur (personnes, véhicule, colis, conteneur) en mouvement et non une acquisition, puis une analyse des données a postériori permettant de cartographier une zone et d'identifier la présence et la quantité d'éléments radioactifs.

L 'invention revendiquée concerne aussi un dispositif et un procédé permettant de délivrer une alarme en temps réel à la suite de l'identification d'une source radioactive illicite en excluant les fausses alarmes dues à des sources radioactives naturelles ou utilisées en diagnostic ou soin médical.

Dans l'invention un poste distant sert à valider l'alarme et permettre à un opérateur d'identifier en temps réel le porteur (directement ou au vu de la vidéo déclenchée par l'alarme). Pour cela, les données pertinentes (spectre, résultat de l'identification, niveau du pic d'énergie, images prises lors de l'émission de l'alarme) et l'alarme sont envoyées en temps réel au poste de contrôle distant.

Dans l'invention les alertes transmises sont paramétrables en fonction du niveau de risque.

Du point de vue traitement nécessaire à cette détection et identification en temps réel, l'originalité de l'invention repose sur une méthode de recherche de pics de forme gaussienne dans un profil spectral pour des durées d'acquisition de l'ordre de la seconde.

La prise en compte du bruit de fond est originale au sens où, dans l'invention, elle est faite de façon glissante au fil du temps afin de prendre en compte les éventuelles variations temporelles de ce bruit de fond. Le calcul du spectre de référence exclut également tout spectre dans lequel une anomalie radiologique a été détectée. Le spectre de référence est ainsi représentatif du bruit de fond local du site à un moment donné.

Par rapport aux dispositifs de l'art connu analysés précédemment et décrits dans les documents référencés [1], [2], [3], [4], le procédé de l'invention présente les avantages suivants.

Les documents référencés [1] et [2] font référence à des méthodes d'analyse d'un signal en temps réel. Cependant, les algorithmes de détection de radionucléides proposés reposent sur des méthodes statistiques. Le procédé de détection de radionucléides proposé dans le cadre de l'invention repose, quant à lui, sur un procédé d'analyse du profil spectral, ce qui présente l'avantage de pouvoir fonctionner sans hypothèse sur le nombre et la nature des radioéléments à détecter. De plus, ce type de traitement permet une meilleure estimation de l'énergie d'un pic d'absorption totale et en facilite donc son identification.

Le document référencé [3] fait référence à un procédé de traitement du signal reposant sur l'analyse du profil spectral. Cet algorithme permet la détection de très faibles quantités de radionucléides mais il a été spécifiquement développé dans le cadre de la surveillance radiologique aéroportée et fonctionne sans information sur le fond radiologique environnant. Le document référencé [4] fait référence à un procédé de traitement voisin de celui-ci. Le procédé de détection de radionucléides proposé dans le cadre de l'invention prend en compte le fond radiologique environnant et son évolution dans le temps permettant ainsi d'améliorer ses performances de détection.

### BREVE DESCRIPTION DES DESSINS

La figure 1 illustre le dispositif de l'invention.
La figure 2 illustre les différentes étapes du procédé de l'invention.
La figure 3 illustre le lissage d'un spectre brut par un filtre numérique.
La figure 4 illustre la recherche des pics d'absorption totale par l'étude des dérivées premières et secondes du spectre après filtrage.
La figure 5 illustre l'estimation du fond radiologique sous les spectres non lissés.
La figure 6 illustre la visualisation des résultats.

### EXPOSÉ DÉTAILLÉ DE MODES DE RÉALISATION PARTICULIERS

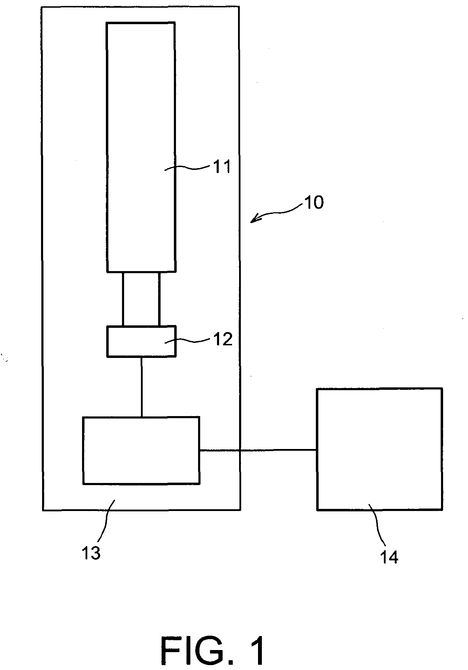

Comme illustré sur la figure 1, le dispositif de l'invention 10, pour couvrir les besoins relatifs à la détection et à l'identification de sources de rayonnement, gamma, en mouvement comprend :
- au moins un détecteur 11,
- au moins un spectromètre 12 analogique ou numérique,
- une unité d'acquisition et de traitement 13,
- un poste de contrôle 14.

L'originalité de l'invention repose principalement sur un procédé d'analyse des spectres spécifique fonctionnant sur l'unité d'acquisition et de traitement et permettant la détection et l'identification en temps réel des radionucléides de la source radioactive.

### 1. Le au moins un détecteur 11

Le au moins un détecteur 11 comprend, par exemple, un ou plusieurs cristaux de iodure de sodium (Nal) choisis pour leur grand volume de détection (taille unitaire 10,16 cm x 10,16 cm x 40,64 cm). Ce volume de détection procure une efficacité de détection importante, nécessaire aux mesures effectuées sur des temps très courts. De plus, de tels cristaux permettent d'obtenir une information spectroscopique d'un signal radioactif permettant son identification.

Un écran peut aussi être ajouté sur une ou plusieurs faces du détecteur, pour permettre de réduire le fond radiologique et donc d'améliorer la détection dans une direction donnée. Cet écran peut être composé d'une feuille de plomb de 1 à 2 mm d'épaisseur et d'une feuille de cuivre de 0,5 mm d'épaisseur.

### 2. Le au moins un spectromètre 12

Le signal détecté est récupéré en sortie du détecteur 11 par un spectromètre analogique ou numérique 12. Celui-ci permet un échantillonnage du signal, toutes les secondes au moins pour un spectromètre analogique et toutes les 0,5 secondes au moins pour un spectromètre numérique.

Si plusieurs cristaux de Nal sont utilisés pour la détection, un spectromètre est utilisé pour chaque cristal et les signaux résultant sont sommés avant leur envoi vers l'unité d'acquisition et de traitement 13.

Ce spectromètre 12 permet d'échantillonner le signal provenant d'un détecteur Nal ; la période d'échantillonnage étant supérieure à 0,5 s.

### 3. L'unité d'acquisition et de traitement 13

Le signal échantillonné est transmis à l'unité d'acquisition et de traitement 13 composée de différentes interfaces d'entrée et sortie, d'un processeur, et d'une unité de stockage de données et pilotée par un système d'exploitation. L'unité d'acquisition et de traitement 13 exécute les différentes étapes du procédé de l'invention permettant l'analyse des données.

L'unité d'acquisition et de traitement 13 permet l'acquisition du signal, le fonctionnement d'algorithmes de détection et d'identification, et éventuellement le transfert des informations relatives à une détection d'anomalie vers un poste de contrôle fixe distant 14. L'unité d'acquisition et de traitement 13 est composée d'un processeur, d'une unité de stockage des données, comme par exemple un disque dur.

Dans un exemple de réalisation du dispositif de détection et d'identification de sources gamma en mouvement, celui-ci utilise des composants électroniques disponibles commercialement et un algorithme de détection et d'identification d'anomalie radioactive développé spécifiquement pour l'application.

Les spectres gamma enregistrés par l'unité d'acquisition et de traitement 13 sont constitués par la somme d'un fond radiologique continu et d'un ou plusieurs pics d'absorption totale qui sont les contributions spectrales caractéristiques des radioéléments en présence. La diffusion du rayonnement, le bruit de fond gamma de l'instrumentation ainsi que les rayonnements cosmiques sont les principales contributions au fond radiologique continu.

La détection et l'identification des radioéléments sont effectuées à partir du ou de leurs pics d'absorption totale présents sur un spectre. Le traitement des mesures permet d'isoler ces pics d'absorption totale du fond radiologique par une méthode d'analyse du profil spectral puis d'en identifier l'émetteur.

Pour cela, le procédé de l'invention résout plusieurs difficultés :
- Le temps d'acquisition, nécessairement court pour obtenir une bonne sensibilité aux sources se déplaçant rapidement, entraîne des fluctuations statistiques importantes du spectre gamma. L'amplitude de ces fluctuations peut être supérieure à l'amplitude des pics d'absorption totale.
- La résolution du détecteur de type Nal est de l'ordre de 8% environ à 662 keV. Elle contribue à réduire le rapport pic sur fond radiologique dans chaque canal et rend d'autant plus difficile la détection et la localisation des pics.
- Les radioéléments (⁴⁰K, ²³⁸U et ²³²Th et leurs descendants) présents naturellement sur l'ensemble du globe génèrent des pics et un fond radiologique pouvant interférer avec la détection et la localisation des pics d'intérêt.

Le procédé de l'invention permettant la détection et l'identification de sources radioactives en mouvement est décrit en détail ci-après. La recherche des pics d'absorption totale est effectuée de façon indépendante pour chaque spectre. L'algorithme de traitement repose sur un procédé d'analyse du profil spectral permettant d'isoler une ou plusieurs anomalies radioactives dans un spectre.

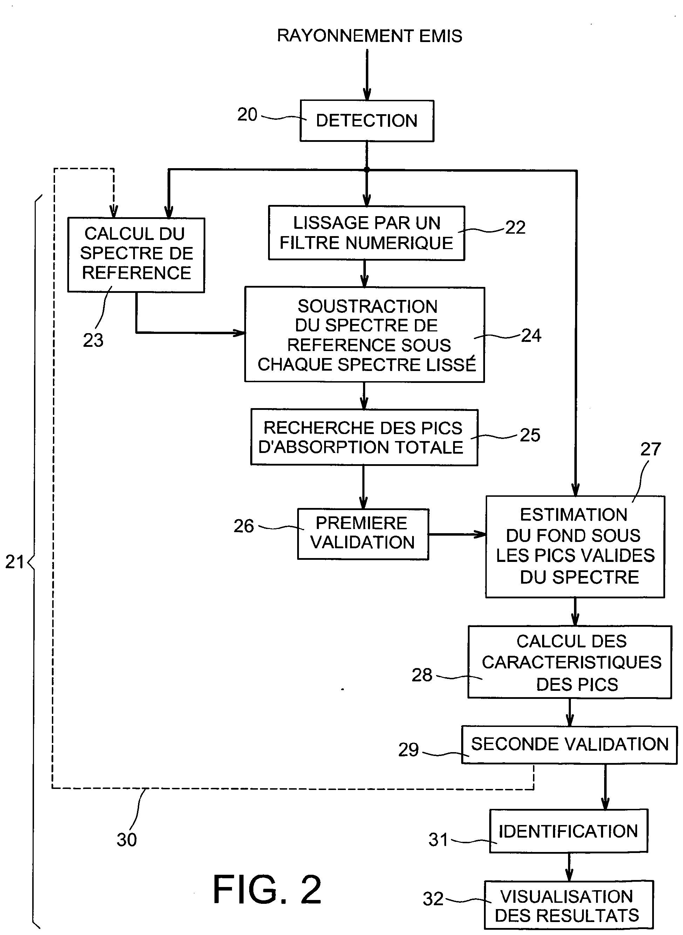

Comme illustré sur la figure 2, le procédé de l'invention après une étape de détection du signal 20, comprend une étape d'analyse du spectre de ce signal 21 comportant les phases suivantes :

### 1. Lissage du spectre brut 22 :

En raison des fortes fluctuations statistiques du spectre brut et de la faible amplitude des pics d'absorption totale par rapport au fond radiologique, une étape de lissage du spectre brut est nécessaire. La phase de lissage repose sur l'ajustement par la méthode des moindres carrés d'un polynôme de degré 4 sur les données brutes. Le nombre de points, sur lequel est ajusté le polynôme, varie en fonction de l'énergie. Cette phase de lissage permet d'éliminer les fluctuations non significatives du spectre brut avant d'autres traitements.

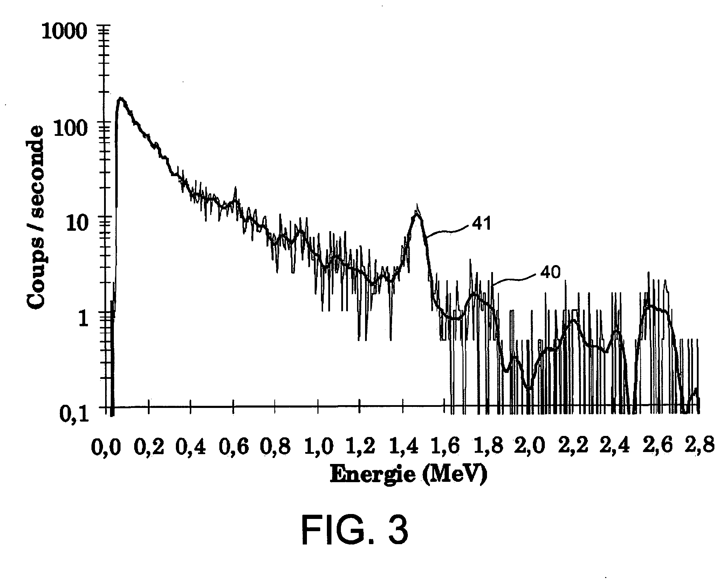

La figure 3 illustre cette phase de lissage d'un spectre brut 40 par un filtre numérique pour obtenir un spectre filtré 41.

### 2. Calcul d'un spectre de référence 23 :

Afin de prendre en compte la radioactivité naturelle du site, un spectre de référence représentant les contributions du fond radiologique continu et des radionucléides environnants est évalué. Ce spectre de référence est le spectre moyen calculé sur un nombre paramétrable N de mesures. Pour prendre en compte les éventuelles variations de la radioactivité ambiante, le spectre de référence est recalculé, à partir des N dernières mesures.

Le spectre de référence calculé, qui doit représenter la radioactivité ambiante du site, ne doit donc pas inclure de mesures faites en présence d'anomalies. Le procédé de l'invention permet de ne pas prendre en compte dans le calcul du spectre de référence un point de mesure pour lequel un ou plusieurs pics ont été détectés, validés et identifiés comme résultant de l'émission de l'un des radionucléides recherchés.

### 3. Soustraction de ce spectre de référence 24 :

Le spectre de référence le plus récent est soustrait aux spectres lissés.

### 4. Recherche des pics 25 :

La recherche des pics d'absorption totale est effectuée par l'étude des dérivées première et seconde du spectre. Les deux dérivées sont calculées successivement sur chaque spectre. Un pic est détecté à chaque fois que la dérivée première prend des valeurs positives ou que la dérivée seconde prend des valeurs négatives.

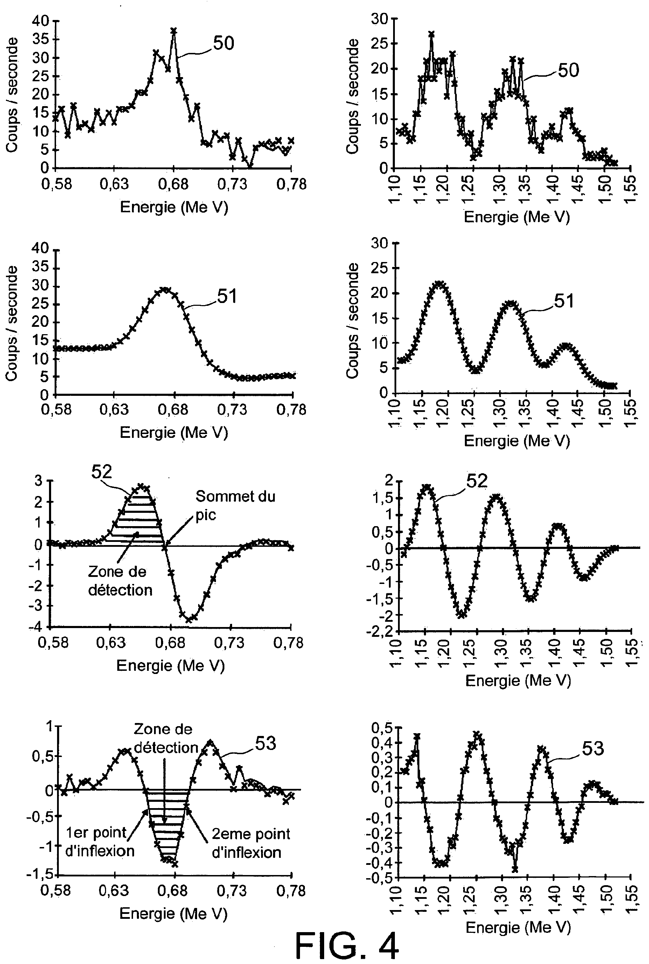

Les courbes de la figure 4 illustrent cette phase de recherche des pics d'absorption totale par l'étude des dérivées premières et secondes du spectre après filtrage. Sur cette figure 4 sont ainsi représentés :
- le spectre brut 50,
- le spectre filtré 51,
- la dérivée première 52,
- la dérivée seconde 53.

### 5. Première validation de la détection des pics 26

Une phase de première validation de la détection des pics est ajoutée afin de rejeter les fluctuations non significatives. Pour cela on détermine expérimentalement un seuil de sensibilité pour chaque dérivée permettant d'évaluer l'importance du pic considéré. Un pic est validé lorsque les deux dérivées dépassent un seuil respectif.

### 6. Estimation du fond radiologique sous les spectres non lissés 27 :

Les caractéristiques des pics d'absorption totale validés lors de la phase précédente sont calculées à partir des spectres bruts. Une fois les régions spectrales comportant un ou plusieurs pics localisées, le fond radiologique sous le ou les pics est estimé puis soustrait.

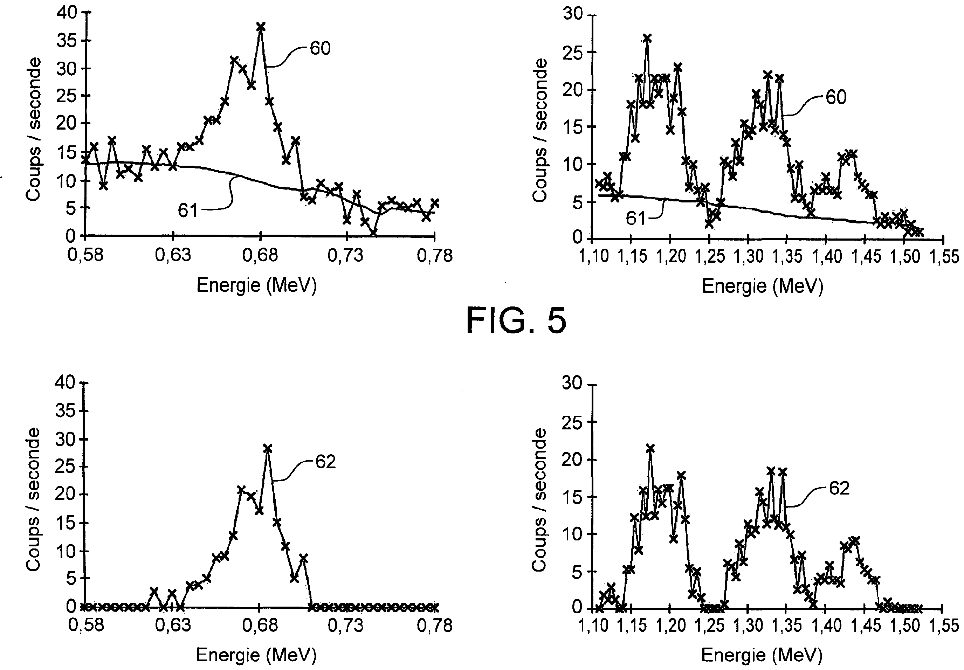

Les courbes de la figure 5 illustrent cette phase d'estimation du fond radiologique sous les spectres non lissés. Sur cette figure 5 sont ainsi représentés :
- le spectre brut 60,
- le fond continu ajusté 61,
- les pics d'absorption 62.

### 7. Calcul des caractéristiques des pics 28 :

En faisant l'hypothèse que les pics d'absorption sont correctement modélisés par un profil gaussien, l'aire des pics, leur résolution et le seuil de décision associé peuvent être calculés.

### 8. Seconde validation de la détection des pics 29 :

Une seconde validation de la détection des pics est effectuée. Si l'aire calculée d'un pic est supérieure à un seuil de décision associé et si la résolution de ce pic est supérieure à la moitié de la résolution théorique, alors la détection de ce pic est validée. Seuls les pics validés sont conservés.

Lorsqu'un ou plusieurs pics ont été détectés et validés dans un spectre, ce spectre n'est pas pris en compte dans le calcul du spectre de référence (liaison 30).

### 9. Identification des radionucléides détectés 31 :

Les énergies des pics d'absorption totale détectés et validés lors des phases précédentes sont comparées aux énergies données par une table des radioéléments définie par l'utilisateur, permettant ainsi une identification automatique des radionucléides détectés.

Les radionucléides à identifier sont répartis en quatre catégories : naturel, médical, industriel et nucléaire. Selon la catégorie, il est possible de déterminer si le ou les radionucléides détectés représentent une menace potentielle et s'il est nécessaire de déclencher une alarme.

### 10. Visualisation des résultats 32 :

Le procédé de l'invention permet de classer chaque événement dans une de trois catégories en permettant d'évaluer la dangerosité de la source détectée :
a. La source détectée n'est pas une menace.
b. La source détectée peut être une menace.
c. La source détectée est une menace.

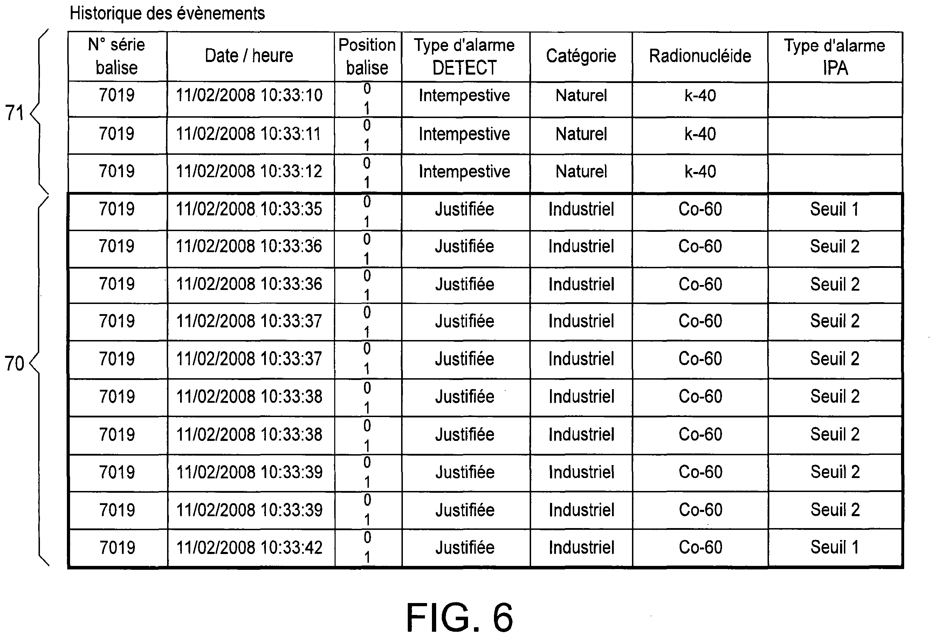

La figure 6 illustre cette phase de visualisation des résultats. Le résultat de cette analyse peut être visualisé simplement sur le poste fixe distant : une couleur peut être associée à chaque catégorie d'événement : le rouge (zone 70) indique que la source détectée est une menace, le orange indique une possible menace tandis que le vert (zone 71) indique qu'il n'y a aucune détection ou que la source détectée n'est pas menaçante.

Si le résultat obtenu par ce procédé de traitement des données est la détection d'un transport illégal de matières radioactives, des alarmes peuvent être alors déclenchées, notamment une indication visuelle sur un écran ou la transmission des résultats vers un poste fixe distant ou encore le déclenchement de l'enregistrement de prises de vue.

### Variantes de réalisation du dispositif de l'invention

De nombreuses variantes du dispositif de l'invention sont possibles sans sortir du cadre de l'invention.

Dans une variante de réalisation, plusieurs dispositifs selon l'invention peuvent être reliés entre eux ou reliés à un même poste de contrôle local ou distant, formant ainsi un réseau d'au moins deux stations. La mise en réseau de plusieurs dispositifs selon l'invention permet alors de corréler les données provenant des dispositifs et d'en déduire des informations supplémentaires sur la position ou la vitesse de la source radioactive en mouvement.

Par exemple, la corrélation des signaux provenant de deux dispositifs placés du même coté par rapport à la source en mouvement (le long d'une route, par exemple) permet d'obtenir, entre autre, une information sur le sens de déplacement de la source.

Une autre variante de réalisation utilise deux dispositifs situés de part et d'autre de la source en mouvement (par exemple, surveillance des véhicules aux frontières). Cette configuration permet d'obtenir, entre autre, une information sur l'activité de la source et la distance relative à chaque point du dispositif de mesure.

L'utilisation de trois dispositifs ou plus permet la surveillance d'une zone entière (comme par exemple un parking ou un hall de gare ou de préfecture). La corrélation des signaux venant des dispositifs permet d'ajouter à l'estimation de l'activité d'une source, une localisation de cette source.

Le dispositif de l'invention peut comprendre, en outre, un système de prise de vues, comme par exemple une caméra. Dans un premier temps, ce système de prise de vues peut transmettre des informations au dispositif comme la distance et la vitesse de transit d'un objet radioactif permettant ainsi d'affiner le diagnostic sur la dangerosité de la source. Dans un deuxième temps, le déclenchement de ce système peut être conditionné par la détection et l'identification d'une source jugée potentiellement dangereuse. Les prises de vues ainsi obtenues facilitent l'identification visuelle du danger.

De même le dispositif de l'invention peut comprendre un système de positionnement tel qu'un système GPS (« Global Positioning System »), qui permet de dater en absolu à la milliseconde près et de localiser au mètre près le dispositif au sein d'un réseau de dispositifs. Ces informations de datation et de localisation peuvent être transmises à un poste fixe local ou distant en même temps que les données radiologiques permettant ainsi d'identifier sans ambigüité les spectres et les alertes par leur date et la localisation du dispositif.

Un système de transmission des données à distance (GPRS, Wi-Fi, ...) peut être ajouté au dispositif de l'invention. On dispose ainsi d'un détecteur pouvant fonctionner de manière autonome : le dispositif de l'invention peut alors fonctionner en continu et transmettre ses résultats, quel que soit son lieu d'implantation, à un poste de contrôle fixe distant.

Plusieurs dispositifs selon l'invention peuvent aussi être reliés au même poste de contrôle fixe distant formant ainsi un réseau. Ceci permet de corréler les données provenant de plusieurs dispositifs et d'en déduire des informations supplémentaires sur le déplacement d'un porteur de source ou sur la localisation précise de cette source, par exemple.

Le dispositif de l'invention peut comprendre, en plus du détecteur de rayonnement gamma, un détecteur de neutrons. En effet, certaines matières nucléaires émettent principalement des neutrons, combinés ou non avec une émission de rayonnement gamma. Les mesures obtenues par la combinaison des deux détecteurs permettent donc la surveillance d'un plus grand nombre de radionucléides.

### REFERENCES

[1] US 2005/0023477
[2] US 2007/0034808
[3] *"*Extraction of full absorption peaks in airborne gamma-spectrometry by filtering techniques coupled with a study of the derivatives. Comparison with the window method" de L. Guillot (Journal of Environmental Radioactivity, 53, 2001).
[4] *"*Analysis of natural gamma-ray spectra obtained from sediment cores with the shipboard scintillation detector of the Ocean Drilling Program: example from Leg 156" de P. Blum et al. (Proceedings of the Ocean Drilling Program, Scientific Results, 156, 1997).

## Revendications

1. Dispositif (10) de contrôle radiologique et nucléaire en continu d'un flux de personnes, de véhicules, de conteneurs ou de colis pour prévenir des risques liés à des transports illégaux de matières radioactives et nucléaires et pour détecter et identifier en temps réel, sans point de ralentissement obligatoire, une source de rayonnement gamma en mouvement présente sur une personne ou dans un véhicule, un conteneur ou un colis, comprenant :
- au moins un détecteur de rayonnement (11) comprenant au moins un cristal d'iodure de sodium choisi pour son grand volume de détection, ledit au moins un détecteur de rayonnement étant apte à delivrer un signal proportionnel au rayonnement gamma détecté,
- au moins un spectromètre (12) couplé à cet au moins un détecteur de rayonnement et apte à échantillonner et mettre en forme le signal proportionnel délivré et à générer un spectre brut à partir de celui-ci,
- une unité d'acquisition et de traitement (13) couplée à cet au moins un spectromètre et comprenant un processeur apte à analyser ce spectre brut issu de cet au moins spectromètre, automatiquement et en temps réel, et comprenant une unité de stockage des informations dans laquelle sont enregistrées les instructions suivantes exécutables par le processeur :
• des instructions (22) de lissage du spectre brut pour obtenir un spectre filtré,
• des instructions (23) de calcul d'un spectre de référence représentant les contributions du fond radiologique continu et des radionucléides environnants représentant la radioactivité ambiante du site, dans lesquelles un point de mesure, pour lequel au moins un pic d'absorption totale a été détecté, validé et identifié comme résultant de l'émission d'un radionucléide, n'est pas pris en compte dans le calcul d'un spectre de référence,
• des instructions (24) de soustraction de ce spectre de référence au spectre filtré et première validation de la détection de pics d'absorption totale sur le spectre filtré,
• des instructions (27) d'estimation et soustraction du fond sous les pics d'absorption totale validés du spectre brut, calcul des caractéristiques de ces pics d'absorption totale et seconde validation de la détection des pics d'absorption totale,
• des instructions de comparaison des énergies des pics d'absorption totale détectés et validés avec les énergies données dans une table de radionucléides pour identifier les radionucléides de la source de rayonnement gamma,
• des instructions de catégorisation des radionucléides identifiés pour déterminer si la source détectée peut constituer une menace, et
• des instructions de déclenchement automatique d'une alarme en temps réel, en excluant les fausses alarmes dues à des sources radioactives naturelles ou utilisées en diagnostic ou soin médical,
• des instructions de déclenchement automatique d'un système de prise de vue pour identification du porteur de la source ayant déclenché l'alarme,
• des instructions de visualisation des résultats comprenant le spectre brut de la source de rayonnement gamma, pour examen par un opérateur.

2. Dispositif selon la revendication 1, comprenant en outre un système de prise de vue couplé au système de l'unité d'acquisition et de traitement.

3. Dispositif selon l'un quelconque des revendications précédentes, comprenant en outre une liaison pour la transmission des résultats d'analyse de l'unité d'acquisition et de traitement vers un poste de contrôle distant (14).

4. Dispositif selon l'un quelconque des revendications précédentes, comprenant en outre au moins un écran de plomb ou cuivre ajouté sur l'une des faces d'au moins un détecteur.

5. Dispositif selon l'un quelconque des revendications précédentes, dans lequel le au moins un spectromètre est un spectromètre analogique qui permet un échantillonnage du signal au moins toutes les secondes.

6. Dispositif selon l'un quelconque des revendications 1 à 5, dans lequel le au moins un spectromètre est un spectromètre numérique qui permet un échantillonnage du signal au moins toutes les 0,5 secondes.

7. Dispositif selon l'un quelconque des revendications précédentes, qui comprend plusieurs spectromètres associés chacun à un cristal, et des moyens de sommation des signaux résultants avant leur envoi vers l'unité d'acquisition et de traitement.

8. Dispositif selon l'un quelconque des revendications précédentes, qui comprend un système de positionnement GPS.

9. Dispositif selon l'un quelconque des revendications précédentes, qui comprend en outre un détecteur de neutrons, couplé à l'unité d'acquisition et de traitement, pour détection de sources émettant des rayonnements neutron.

10. Procédé de contrôle radiologique et nucléaire en continu d'un flux de personnes, de véhicules, de conteneurs ou de colis, pour prévenir des risques liés à des transports illégaux de matières radioactives et nucléaires et pour détecter et identifier en temps réel, sans point de ralentissement obligatoire, une source de rayonnement gamma en mouvement présente sur une personne, un véhicule, un conteneur ou un colis, **caractérisé en ce qu'**il comprend les étapes suivantes :
- récupération (20) d'un signal proportionnel à un rayonnement émis par une source de rayonnement gamma en utilisant au moins un détecteur de rayonnement (11) comprenant au moins un cristal d'iodure de sodium choisi pour son grand volume de détection, échantillonnage de ce signal et génération d'un spectre brut,
- analyse automatique en temps réel du spectre brut, cette étape d'analyse comportant les phases suivantes exécutables par un processeur :
• lissage (22) du spectre brut pour obtenir un spectre filtré,
• calcul (23) d'un spectre de référence, représentant la contribution du fond radiologique continu et des radionucléides environnants représentant la radioactivité ambiante du site, dans lequel un point de mesure, pour lequel au moins un pic d'absorption totale a été détecté, validé et identifié comme résultant de l'émission d'un radionucléide, n'est pas pris en compte dans le calcul d'un spectre de référence,
• soustraction (24) de ce spectre de référence au spectre filtré, recherche des pics d'absorption totale, et première validation (26) de la détection des pics d'absorption totale sur le spectre filtré,
• estimation (27) et soustraction du fond sous les pics d'absorption totale validés du spectre brut, calcul (28) des caractéristiques des pics d'absorption totale, et seconde validation (29) de la détection des pics d'absorption totale,
• identification (31) des radionucléides de la source de rayonnement gamma dans laquelle on compare les énergies des pics d'absorption totale détectés et validés avec les énergies données dans une table de radionucléides,
• catégorisation des radionucléides identifiés pour déterminer si la source de rayonnement gamma peut constituer une menace,
• si la source de rayonnement gamma est une menace :
❖ déclenchement automatique d'une alerte en temps réel en excluant les fausses alertes dues à des sources radioactives naturelles ou utilisées en diagnostic ou soin médical,
❖ déclenchement automatique d'un système de prise de vues pour identification du porteur de la source ayant déclenché l'alarme,
❖ visualisation des résultats dont le spectre brut de la source de rayonnement gamma, origine de l'alerte, pour examen par un opérateur.

11. Procédé selon la revendication 10, dans lequel la phase de lissage comprend un ajustement par la méthode des moindres carrés d'un polynôme de degré 4 sur les données brutes.

12. Procédé selon l'une quelconque des revendications 10 à 11, dans lequel le spectre référence est un spectre moyen calculé sur un nombre paramétrable de N mesures, N étant un entier positif supérieur à 1.

13. Procédé selon l'une quelconque des revendications 10 à 12, dans lequel le spectre de référence est recalculé périodiquement à partir des N dernières mesures.

14. Procédé selon l'une quelconque des revendications 10 à 13, dans lequel la phase de recherche de pics d'absorption totale comprend l'étude successive des dérivées première et seconde du spectre filtré, un pic d'absorption totale étant détecté à chaque fois que la dérivée première prend des valeurs positives ou que la dérivée seconde prend des valeurs négatives.

15. Procédé selon la revendication 14, dans lequel, dans la première validation de la détection des pics d'absorption totale, un pic d'absorption totale est validé lorsque les dérivées première et seconde dépassent un seuil respectif.

16. Procédé selon l'une quelconque des revendications 10 à 15, dans lequel, dans la seconde validation de la détection des pics d'absorption totale, on valide un pic d'absorption totale si l'aire calculée d'un pic d'absorption totale est supérieure à un seuil de décision associé et si la résolution de ce pic d'absorption totale est supérieure à la moitié de la résolution théorique.

17. Procédé selon l'une quelconque des revendications 10 à 16, dans lequel, dans l'étape d'identification, les énergies des pics d'absorption totale détectés et validés sont comparées aux énergies données par une table de radioéléments définie par l'utilisateur.

## Patentansprüche

1. Vorrichtung (10) zur kontinuierlichen radiologischen und nuklearen Untersuchung eines Stroms von Personen, von Fahrzeugen, von Behältern oder von Paketen zum Verhindern von Risiken im Zusammenhang mit illegalen Transporten von radioaktiven und nuklearen Materialien und zum Detektieren und Identifizieren in Echtzeit ohne notwendigen Verlangsamungspunkt einer Gamma-Strahlenquelle in Bewegung, welche an einer Person oder in einem Fahrzeug, einem Behälter oder einem Paket vorliegt, umfassend:
- wenigstens einen Strahlungsdetektor (11), welcher wenigstens einen Natriumiodid-Kristall umfasst, welcher für sein großes Detektionsvolumen ausgewählt ist, wobei der wenigstens eine Strahlungsdetektor in der Lage ist, ein Signal proportional zu der detektierten Gammastrahlung zu liefern,
- wenigstens ein Spektrometer (12), welches mit dem wenigstens einen Strahlungsdetektor gekoppelt und in der Lage ist, das gelieferte proportionale Signal zu bilden und zu formen und ausgehend davon ein Roh-Spektrum zu erzeugen,
- eine Aufnahme- und Verarbeitungseinheit (13), welche mit dem wenigstens einen Spektrometer gekoppelt ist und einen Prozessor umfasst, welcher in der Lage ist, das von dem wenigstens einen Spektrometer ausgegebene Roh-Spektrum automatisch und in Echtzeit zu analysieren, und umfassend eine Speichereinheit für Informationen, in welcher die folgenden von dem Prozessor ausführbaren Anweisungen abgelegt sind:
- Anweisungen (22) zum Glätten des Roh-Spektrums, um ein gefiltertes Spektrum zu erhalten,
- Anweisungen (23) zum Berechnen eines Referenzspektrums, welches die Beiträge des kontinuierlichen radiologischen Untergrunds und der Radionukleide in der Umwelt repräsentiert, wodurch die Hintergrund-Radioaktivität des Orts repräsentiert ist, wobei ein Messpunkt, für welchen wenigstens eine totale Absorptionsspitze detektiert, validiert und als von der Emission von einem Radionukleid resultierend identifiziert worden ist, nicht bei der Berechnung eines Referenzspektrums berücksichtigt wird,
- Anweisungen (24) zum Subtrahieren dieses Referenzspektrums von dem gefilterten Spektrum und für eine erste Validierung der Detektion von totalen Absorptionsspitzen in dem gefilterten Spektrum,
- Anweisungen (27) zum Schätzen und Subtrahieren des Untergrunds unterhalb der validierten totalen Absorptionsspitzen des Roh-Spektrums, zum Berechnen von Charakteristiken dieser totalen Absorptionsspitzen und für eine zweite Validierung der Detektion der totalen Absorptionsspitzen,
- Anweisungen zum Vergleichen der Energien der detektierten und validierten totalen Absorptionsspitzen mit den gegebenen Energien in einer Tabelle von Radionukleiden, um die Radionukleide der Gamma-Strahlenquelle zu identifizieren,
- Anweisungen zum Kategorisieren der identifizierten Radionukleide zum Bestimmen, ob die detektierte Quelle eine Bedrohung darstellen kann, und
- Anweisungen zum automatischen Auslösen eines Alarms in Echtzeit, wobei Fehlalarme aufgrund von natürlichen oder zur Diagnose oder medizinischen Versorgung eingesetzten radioaktiven Quellen ausgeschlossen werden,
- Anweisungen zum automatischen Auslösen eines Bildaufnahme-Systems zur Identifikation des Trägers der Quelle, welche den Alarm ausgelöst hat,
- Anweisungen zur Visualisierung der Ergebnisse, umfassend das Roh-Spektrum der Gamma-Strahlenquelle, zur Prüfung durch einen Bediener.

2. Vorrichtung nach Anspruch 1, ferner umfassend ein Bildaufnahme-System, welches mit einer Systemeinheit zur Aufnahme und Verarbeitung gekoppelt ist.

3. Vorrichtung nach einem der vorhergehenden Ansprüche, ferner umfassend eine Verbindung zum Übertragen der Analyseergebnisse der Einheit zur Aufnahme und Verarbeitung zu einem entfernten Kontrollposten (14).

4. Vorrichtung nach einem der vorhergehenden Ansprüche, ferner umfassend wenigstens einen Schirm aus Blei oder Kupfer, welcher an einer der Flächen des wenigstens einen Detektors angebracht ist.

5. Vorrichtung nach einem der vorhergehenden Ansprüche, wobei das wenigstens eine Spektrometer ein analoges Spektrometer ist, welches ein Bilden des Signals wenigstens jede Sekunde erlaubt.

6. Vorrichtung nach einem der Ansprüche 1 bis 5, wobei das wenigstens eine Spektrometer ein digitales Spektrometer ist, welches ein Bilden des Signals wenigstens alle 0,5 Sekunden erlaubt.

7. Vorrichtung nach einem der vorhergehenden Ansprüche, welche mehrere Spektrometer umfasst, welche jeweils einem Kristall zugeordnet sind, sowie Mittel zum Summieren der resultierenden Signale vor ihrem Versenden zu der Einheit zur Aufnahme und Verarbeitung.

8. Vorrichtung nach einem der vorhergehenden Ansprüche, welche ein GPS-Positionsbestimmungssystem umfasst.

9. Vorrichtung nach einem der vorhergehenden Ansprüche, welches ferner einen Neutronendetektor umfasst, welcher mit der Einheit zur Aufnahme und Verarbeitung gekoppelt ist, um Quellen zu detektieren, welche Neutronenstrahlungen emittieren.

10. Verfahren zur kontinuierlichen radiologischen und nuklearen Untersuchung eines Stroms von Personen, von Fahrzeugen, von Behältern oder von Paketen zum Verhindern von Risiken im Zusammenhang mit illegalen Transporten von radioaktiven und nuklearen Materialien und zum Detektieren und Identifizieren in Echtzeit ohne notwendigen Verlangsamungspunkt einer Gamma-Strahlenquelle in Bewegung, welche an einer Person, einem Fahrzeug, einem Behälter oder einem Paket vorliegt, **dadurch gekennzeichnet, dass** es die folgenden Schritte umfasst:
- Rückgewinnung (20) eines Signals proportional zu einer Strahlung, welche von einer Gamma-Strahlungsquelle emittiert wird, unter Verwendung von wenigstens einem Strahlungsdetektor (11), umfassend wenigstens einen Natriumiodid-Kristall für sein großes Detektionsvolumen, Bilden dieses Signals und Erzeugen eines Roh-Spektrums,
- automatische Analyse in Echtzeit des Roh-Spektrums, wobei dieser Analyseschritt die folgenden Phasen umfasst, welche durch einen Prozessor ausführbar sind:
- Glätten (22) des Roh-Spektrums, um ein gefiltertes Spektrum zu erhalten,
- Berechnen (23) eines Referenzspektrums, welches die Beiträge des kontinuierlichen radiologischen Untergrunds und der Radionukleide in der Umwelt repräsentiert, wodurch die Hintergrund-Radioaktivität des Orts repräsentiert wird, wobei ein Messpunkt, für welchen wenigstens eine totale Absorptionsspitze detektiert, validiert und als von der Emission von einem Radionukleid resultierend identifiziert worden ist, nicht bei der Berechnung eines Referenzspektrums berücksichtigt wird,
- Subtrahieren (24) dieses Referenzspektrums von dem gefilterten Spektrum, Suchen von totalen Absorptionsspitzen und erstes Validieren (26) der Detektion von totalen Absorptionsspitzen in dem gefilterten Spektrum,
- Schätzen (27) und Subtrahieren des Untergrunds unterhalb der validierten totalen Absorptionsspitzen des Roh-Spektrums, Berechnen (28) von Charakteristiken dieser totalen Absorptionsspitzen und zweites Validieren (29) der Detektion der totalen Absorptionsspitzen,
- Identifizieren (31) von Radionukleiden der Gamma-Strahlenquelle, wobei die Energien der detektierten und validierten totalen Absorptionsspitzen mit den gegebenen Energien in einer Tabelle von Radionukleiden verglichen werden,
- Kategorisieren der identifizierten Radionukleide zum Bestimmen, ob die detektierte Quelle eine Bedrohung darstellen kann, und
- falls die Gamma-Strahlenquelle eine Bedrohung ist:
- automatisches Auslösen eines Alarms in Echtzeit, wobei Fehlalarme aufgrund von natürlichen oder zur Diagnose oder medizinischen Versorgung eingesetzten radioaktiven Quellen ausgeschlossen werden,
- automatisches Auslösen eines Bildaufnahme-Systems zur Identifikation des Trägers der Quelle, welche den Alarm ausgelöst hat,
- Visualisieren der Ergebnisse, darunter das Roh-Spektrum der den Alarm auslösenden Gamma-Strahlenquelle, zur Prüfung durch einen Bediener.

11. Verfahren nach Anspruch 10, wobei die Phase des Glättens eine Anpassung durch die Methode der kleinsten Quadrate eines Polynoms vierter Ordnung auf die Roh-Daten umfasst.

12. Verfahren nach einem der Ansprüche 10 bis 11, wobei das Referenzspektrum ein mittleres Spektrum ist, welches auf einer parametrisierbaren Zahl von N Messungen berechnet wird, wobei N eine positive Ganzzahl größer als 1 ist.

13. Verfahren nach einem der Ansprüche 10 bis 12, wobei das Referenzspektrum periodisch ausgehend von den N letzten Messungen neu berechnet wird.

14. Verfahren nach einem der Ansprüche 10 bis 13, wobei die Phase des Suchens nach totalen Absorptionsspitzen das aufeinander folgende Untersuchen der ersten und zweiten Ableitungen des gefilterten Spektrums umfasst, wobei eine totale Absorptionsspitze jedes Mal detektiert wird, wenn die erste Ableitung positive Werte annimmt oder die zweite Ableitung negative Werte annimmt.

15. Verfahren nach Anspruch 14, wobei bei der ersten Validierung der Detektion von totalen Absorptionsspitzen eine totale Absorptionsspitze validiert wird, wenn die ersten und zweiten Ableitungen eine jeweilige Untergrenze überschreiten.

16. Verfahren nach einem der Ansprüche 10 bis 15, wobei bei der zweiten Validierung der Detektion von totalen Absorptionsspitzen eine totale Absorptionsspitze validiert wird, wenn der berechnete Flächeninhalt einer totalen Absorptionsspitze größer als eine zugeordnete Entscheidungs-Untergrenze ist, und wenn die Auflösung dieser totalen Absorptionsspitze größer als die Hälfte der theoretischen Auflösung ist.

17. Verfahren nach einem der Ansprüche 10 bis 16, wobei bei dem Schritt der Identifikation die Energien der detektierten und validierten totalen Absorptionsspitzen mit den durch eine von dem Benutzer definierte Tabelle von Radioelementen gegebenen Energien verglichen werden.

## Claims

1. A device (10) for continuous radiological and nuclear monitoring of a flow of persons, vehicles, containers or packets for preventing risks related to illegal transports of radioactive and nuclear materials and for detecting and identifying in real time, without compulsory slowing-down point, a source of gamma radiation present on a moving person, vehicle, container or packet, comprising:
- at least one radiation detector (11) comprising at least one sodium iodide crystal selected for its large detection volume, said at least one radiation detector being able to deliver a signal proportional to the gamma radiation,
- at least one spectrometer (12) coupled to this at least one radiation detector and able to sample and shape of the proportional signal and to generate a raw spectrum from this latter,
- an acquisition and processing unit (13) coupled to this at least one spectrometer and comprising a processor able to analyse this raw spectrum from this at least spectrometer, automatically and in real time, and comprising a data storage unit in which are stored the following executable instructions:
• instructions of smoothing the raw spectrum to obtain a filtered spectrum,
• instructions (23) of calculating a reference spectrum representing the contributions of the continuous radiological background and of the surrounding radionuclides representing the ambient radioactivity of the site, in which a measurement point for which at least one peak of full absorption has been detected, validated and identified as resulting from the emission of a radionuclide, is not taken into account in the calculation of a reference spectrum,
• instructions (24) of subtracting this reference spectrum to the filtered spectrum and first validation of the detection of the full absorption peaks on the filtered spectrum,
• instructions (27) of estimating and subtracting the background under the validated full absorption peaks of the raw spectrum, calculating of characteristics of these full absorption peaks and second validation of the full absorption peaks detection,
• instructions of comparing energies of the detected and validated full absorption peaks with the energies given in a table of radionuclides for identifying the radionuclides of the gamma radiation source,
• instructions for categorising identified radionuclides to determine if the detected source is a threat, and
• instructions of automatically triggering an alarm in real time, while excluding false alarms due to natural radioactive sources or used in medical diagnosis or care,
• instructions of automatically triggering a system for taking pictures of the carrier of the source having triggered the alarm,
• instructions of viewing results comprising the raw spectrum of the gamma radiation source, for examination by an operator.

2. The device according to claim 1, further comprising a system for taking pictures coupled to the acquisition and processing unit.

3. The device according to any preceding claims, further comprising a link for transmitting the results of the acquisition and processing unit to a remote monitoring station (14).

4. The device according to any preceding claims, further comprising at least one lead or copper screen is added on one of the faces of at least one detector.

5. The device according to any preceding claims, wherein said at least one spectrometer is an analog spectrometer which allows sampling of the signal at least every second.

6. The device according to any of claims 1 to 5, wherein said at least one spectrometer is a digital spectrometer which allows sampling of the signal at least every 0.5 seconds.

7. The device according to any of the preceding claims, which comprises several spectrometer each associated to a crystal, and means for summing the resulting signals before they are sent to the acquisition and processing unit.

8. The device according to any of the preceding claims, which comprises a GPS positioning system.

9. The device according to any of the preceding claims, which further comprises a neutron detector coupled to the acquisition and processing unit, in order to detect sources emitting neutron radiations.

10. A method for continuous radiological and nuclear monitoring of a flow of persons, vehicles, containers or packets for preventing risks related to illegal transports of radioactive and nuclear materials and for detecting and identifying in real time, without compulsory slowing-down point, a source of gamma radiation present on a moving person, vehicle, container or packet, **characterized in that** it comprises the following steps:
- recording (20) of a signal proportional to a radiation emitted by a gamma radiation source, by using at least one radiation detector (11) comprising at least one sodium iodide crystal selected for its large detection volume, sampling of this signal and generation of a raw spectrum,
- automatically analyzing in real time the raw spectrum, this analysis step includes the following phases executable by a processor:
• smoothing (22) of the raw spectrum in order to obtain a filtered spectrum,
• calculating (23) a reference spectrum representing the contribution of the continuous radiological background and of the surrounding radionuclides representing the ambient radioactivity of the site, in which a measurement point for which at least one peak of full absorption has been detected, validated and identified as resulting from the emission of a radionuclide, is not taken into account in the calculation of a reference spectrum,
• subtracting (24) this reference spectrum to the filtered spectrum, detection of the full absorption peaks, and first validation (26) of the detection of the full absorption peaks on the filtered spectrum,
• estimating (27) and subtracting the background under the validated peaks of the raw spectrum, calculating (28) the characteristics of the full absorptions peaks (28), and a second validation (29) of the detection of the peaks,
• identification (31) of the radionuclides of the gamma radiation source, wherein the energies of the detected and validated total absorption peaks are compared with the energies given in a table of radionuclides,
• categorization of the identified radionuclides to determine if the detected gamma radiation source is a threat,
if the gamma radiation source is a threat:
• automatically triggering an alarm in real time while excluding false alarms due to natural radioactive sources or used in medical diagnosis or care,
• automatically triggering a system for taking pictures of the carrier of the source having triggered the alarm,
• viewing results including the raw spectrum of the gamma radiation source, origin of the alarm, for examination by an operator.

11. The method according to claim 10, wherein the smoothing phase comprises fitting a polynomial of degree 4 on the raw data by the method of least squares.

12. The method according to any of claims 10 to 11, wherein the reference spectrum is an average spectrum calculated on a parameterizable number N of measurements, N being a positive integer greater than 1.

13. The method according to any of claims 10 to 12, wherein the reference spectrum is recalculated periodically from N measurements.

14. The method according to any of claims 10 to 13, wherein the phase for searching for the peaks comprises the successive study of the first and second derivatives of the spectrum, a peak being detected every time when the first derivative assumes positive values or the second derivative assumes negative values.

15. The method according to claim 14, wherein, in the first validation of the detection of the peaks, a peak is validated when the first and second derivatives exceed a respective threshold.

16. The method according to any of claims 10 to 15, wherein, in the second validation of the detection of the peaks, a peak is validated, if the calculated area of a peak is greater than an associated decision threshold and if the resolution of this peak is greater than half the theoretical resolution.

17. The method according to any of claims 10 to 16, wherein, in the identification step, the energies of the detected and validated total absorption peaks are compared with the energies given by a table of radioelements defined by the user.
